# EUROPÄISCHE PATENTSCHRIFT

(11) **EP 2 540 178 B1**
(45) Veröffentlichungstag und Bekanntmachung des Hinweises auf die Patenterteilung: **30.04.2014**
(21) Anmeldenummer: 11189083.6
(22) Anmeldetag: 15.11.2011
(51) Int. Cl.: A43B 5/04, B29D 35/04, A43B 23/17, B29D 35/08

(54) **Verfahren zur Herstellung eines Schalenteils eines Sportschuhs und ein gemäß diesem Verfahren hergestellter Schalenteil**
Method for producing a shell section of a sport shoe, a shell section produced according to this method
Procédé de fabrication d'une partie de coque d'une chaussure de sport et partie de coque fabriquée selon ce procédé

(30) Priorität: 16.11.2010 AT 18782010
(43) Veröffentlichungstag der Anmeldung: 02.01.2013
(73) Patentinhaber: ATOMIC Austria GmbH, 5541 Altenmarkt im Pongau (AT)
(72) Erfinder: Trinkaus, Gerhard, 8580 Köflach (AT); Roe, Jason, 5602 Wagrain (AT)
(74) Vertreter: Burger, Hannes

(56) Entgegenhaltungen:
- EP-A1- 1 462 019
- EP-A1- 1 642 706
- DE-A1- 2 005 900

## Beschreibung

Die Erfindung betrifft ein Verfahren zur Herstellung eines Schalenteils eines Sportschuhs, insbesondere der Vorderfußschale eines Schischuhs, sowie einen gemäß diesem Verfahren hergestellten Schalenteil eines Sportschuhs, wie dies in den Ansprüchen 1 und 16 angegeben ist.

Aus dem Stand der Technik ist bekannt, einen solchen Schalenteil aus mehreren, bevorzugt aus unterschiedlichen Materialien bestehenden Komponenten aufzubauen, um insbesondere einen Schalenteil mit hoher Steifigkeit bzw. Stabilität zu erhalten. Dabei wird in mehreren Spritzgießvorgängen jeweils eine weitere Spritzgießkomponente an ein Halbfabrikat bzw. an den bereits bestehenden Teil des Schalenteils angefügt. Ebenso ist es bekannt, in jeweils einem Spritzgießvorgang zumindest eine zusätzliche, vorgefertigte Komponente im Schalenteil zu integrieren, welche insbesondere nicht durch Spritzgießen erzeugt wurde. Die Schwierigkeiten bestehen darin, die einzelnen Spritzgießvorgänge und die zu integrierenden Komponenten so zu gestalten, dass eine einfache und gut kontrollierbare Herstellung des Schalenteils eines Sportschuhs ermöglicht ist, welcher zugleich eine hohe Steifigkeit bzw. Stabilität aufweist.

Die GB 1 491 634 zeigt einen in einem Spritzgießprozess hergestellten äußeren Schalenteil eines Sportschuhs und ein Verfahren zur Herstellung des Schalenteils. Zur Erhöhung der Zugsteifigkeit und Starrheit des elastischen Spritzgießmaterials des Schalenteils wird zusätzlich ein poröses, stoffähnliches Einlageelement im Schalenteil integriert, wobei das Spritzgießmaterial das Einlageelement während des Herstellungsprozesses durchdringen und umschließen soll. Das poröse Einlageelement besteht aus mehreren Schichten Kunststoffgewebe bzw. Kunststofffolien und wird genau in jenen Bereichen des Sportschuhs platziert, in dem eine erhöhte Steifigkeit und Starrheit nötig bzw. vorgesehen ist. Gemäß dem gezeigten Verfahren wird auf einem fußförmigen Leisten zuerst das poröse, stoffähnliche Einlageelement aufgezogen, dann die äußere Spritzgießform über den Leisten positioniert und schließlich das Spritzgießmaterial, wie beispielsweise Polyurethan, in den Raum zwischen Leisten und Spritzgießform eingebracht. Dabei soll das Spritzgießmaterial das poröse Einlageelement nicht nur durchdringen, sondern auch geringfügig vom Leisten abheben, sodass das Einlageelement vollständig vom Spritzgießmaterial umschlossen wird und ein einheitliches Schalenteil gebildet wird. Vor allem das leichte Abheben des Einlageelements vom fußförmigen Leisten stellt einen nur schwer kontrollierbaren Verfahrensschritt dar, sodass nicht immer sichergestellt werden kann, dass das Einlageelement vollständig vom Spritzgießmaterial umschlossen ist. So könnte es durchaus passieren, dass das Einlageelement etwa an der Innen- oder Außenseite des Schalenteils zumindest teilweise sichtbar ist.

Aus EP 0 808 708 A1 ist ein Spritzgießverfahren insbesondere für Schalenteile eines Sportschuhs bekannt, bei dem in die Spritzgießform zuerst ein weiches Spritzgießmaterial so eingebracht wird, dass Kanäle in dem erzeugten Spritzgießteil gebildet werden. In einem zweiten Verfahrensschritt werden diese Kanäle und ebenso die daran anschließenden Bereiche des aus dem weichen Material bestehenden Spritzgießteils mit einem unnachgiebigen Spritzgießmaterial überspritzt, um die Stabilität bzw. Steifigkeit des Sportschuhs zu erhöhen. Durch das Überspritzen über den Bereich der Kanäle hinaus wird ein Austreten des unnachgiebigen Spritzgießmaterials an den oberen Kanten der Kanäle im zweiten Herstellungsschritt verhindert, da die Spritzgießform nicht mehr genau an den oberen Kanten der Kanäle abdichtend positioniert werden muss, sondern etwas außerhalb der Kanäle flächig an den aus dem weichen Material gefertigten Spritzgießteil stößt. Es sind somit größere Toleranzen bei der Positionierung bzw. bei den Abmessungen der Spritzgießformen bzw. Spritzgießteile möglich, wodurch weniger Ausschussteile zu erwarten sind. Die maximal erreichbare Steifigkeit des Schalenteils ist jedoch durch die ausschließliche Verwendung von Spritzgießmaterialien im Herstellungsprozess deutlich begrenzt.

DE2005900 offenbart ein Verfahren zur Herstellung eines Schalenteils eines Sportschuhs, insbesondere der Vorderfußschale eines Schischuhs, basierend auf dem Zusammenfügen mehrerer, bevorzugt aus unterschiedlichen Materialien bestehender Komponenten des Schalenteils in einem oder mehreren Spritzgießvorgängen, mit den Schritten:
- Herstellen zumindest eines dreidimensionalen, formstabilen Schuhversteifungsteils,
- Anbringen bzw. Positionieren Schuhversteifungsteils auf dem Leisten und zumindest teilweises Umspritzen des Schuhversteifungsteils mit einem Kunststoff, sodass ein einstückiger Schalenteil eines Sportschuhs gebildet wird.

Nach dem Umspritzen der Karkasse befindet sich auf der Innenseite des Schalenteils "Füllmaterial", welches aber dem Material der Außenseite des Schalenteils entspricht.

Der vorliegenden Erfindung liegt die Aufgabe zugrunde, ein Verfahren zur Herstellung eines Schalenteils eines Sportschuhs, insbesondere der Vorderfußschale eines Schischuhs, zu schaffen, welches einerseits eine einfache und gut kontrollierbare Herstellung von Schalenteilen mit zumindest in bestimmten Bereichen sehr hoher Steifigkeit bzw. Stabilität ermöglicht und zugleich die Bearbeitbarkeit bzw. Anpassbarkeit dieses Schalenteils während der Herstellung und in bestimmten Anwendungsfällen auch danach sicherstellt. Darüber hinaus ist es eine Aufgabe der Erfindung, einen Schalenteil eines Sportschuhs zu schaffen, mit welchem die genannten Aufgabenstellungen gelöst werden.

Die erstgenannte Aufgabe der Erfindung wird durch ein Verfahren gemäß Anspruch 1 gelöst.

Erfindungsgemäß wird in dem Verfahren für den aus mehreren Komponenten bestehenden Schalenteil zumindest ein dreidimensionales, formstabiles Schuhversteifungsteil. Auf der Innenseite des dreidimensionalen, formstabilen Schuhversteifungsteils wird ein gegenüber dem Schuhversteifungsteil vergleichsweise leicht bearbeitbares bzw. verarbeitbares Füllmaterial aufgebracht, dessen dreidimensionale, vom Schuhversteifungsteil abgewandte Innenseite zu einem überwiegenden Teil der Form eines fuß- oder innenschuhförmigen Leistens folgt, auf dem das mit dem Füllmaterial ausgestattete Schuhversteifungsteil in einem nächsten Schritt angebracht bzw. positioniert wird. Unter Leisten ist dabei jegliches Organ zu verstehen, welches den Innenraum eines zu fertigenden Schuhs zumindest teilweise modelliert und bei der Schuhherstellung insbesondere zur Halterung, Fixierung bzw. Formung des Schuhs bzw. seiner Komponenten dient. Im Speziellen ist damit auch ein als Spritzgießform dienendes Leisten zur Abgrenzung des Innenraums eines zu fertigenden Schuhs umfasst. Zweckmäßig ist es, wenn das bearbeitbare Füllmaterial auf zumindest 50 %, insbesondere mehr als 75 %, bevorzugt 90 % bis 100 % der Innenfläche des Schuhversteifungsteils aufgebracht wird. Beim anschließenden Umspritzen des Leistens mit einem Kunststoff wird auch der Schuhversteifungsteil zumindest teilweise umspritzt und es wird ein einstückiger Schalenteil eines Sportschuhs gebildet. Die Innenseite des Schalenteils besteht daher zum einen aus dem Kunststoff und zum anderen aus dem auf dem Schuhversteifungsteil aufgebrachten Füllmaterial. Diese Materialien sind gut bearbeitbar bzw. verarbeitbar und können somit auf einfache Art und Weise in unterschiedliche Formen gebracht werden, sodass beispielsweise die Innenseite des Schalenteils entsprechend aktueller Anforderungen angepasst werden kann. Ebenso ist es möglich, durch Variation der Art des Füllmaterials und des Kunststoffs die Eigenschaften des Schalenteils, beispielsweise dessen Härte, festzulegen. Somit wird mit dem erfindungsgemäßen Verfahren ein Schalenteil geschaffen, bei dem unter anderem dessen Innenseite in verschiedene Formen gebracht werden kann und gemäß dem gegebenen Anwendungsfall mit unterschiedlichen Dämpfungseigenschaften, Kontur- bzw. Oberflächenverläufen und dergleichen ausgestattet werden kann.

Wesentlich ist, dass die dem Füllmaterial und dem Kunststoff fehlende Steifigkeit bzw. Stabilität mittels des dreidimensionalen, formstabilen Schuhversteifungsteils bereitgestellt wird. Das Schuhversteifungsteil ist dabei an der Position im Schalenteil angebracht, an dem eine erhöhte Steifigkeit bzw. Stabilität nötig ist. Das Problem der schlechten bzw. schwierigen Bearbeitbarkeit des formstabilen Schuhversteifungsteils wird dadurch gelöst, dass auf dessen Innenseite das vergleichsweise leicht zu bearbeitende Füllmaterial aufgebracht wird. Mit dem erfindungsgemäßen Verfahren ist es möglich, die Vorteile der einfachen Bearbeitbarkeit bzw. Anpassbarkeit und der hohen Steifigkeit bzw. Stabilität zu kombinieren. Grundsätzlich wird die Herstellung eines Schalenteils eines Sportschuhs mittels Spritzgießvorgängen nicht wesentlich verändert.

Von Vorteil sind auch die weiterführenden Maßnahmen gemäß Anspruch 2, da dadurch eine formschlüssige und somit stabile bzw. robuste Verbindung zwischen Schuhversteifungsteil und Kunststoffteil gegeben ist. Durch ein zumindest teilweises Umspritzen der Außenseite des Schuhversteifungsteils wird neben einem verbesserten Formschluss auch erreicht, dass die Vorteile des Kunststoffs beispielsweise in Bezug auf Bearbeitbarkeit bzw. dämpfende Eigenschaften zumindest teilweise auch an der Außenseite des Schuhversteifungsteils genutzt werden können.

Von Vorteil sind auch die Maßnahmen gemäß Anspruch 3, da die genannten Materialien sehr stabil bzw. biegefest sind und somit zur Herstellung von sehr hochwertigen Schuhversteifungsteilen herangezogen werden können. Ebenso sind die Herstellungs- und Verarbeitungsprozesse für diese Materialien heutzutage technisch ausgereift.

Vorteilhaft ist auch die Ausgestaltung nach Anspruch 4, da dadurch Schuhversteifungsteile geschaffen werden, die einerseits die nötige Stabilität bzw. Steifigkeit aufweisen und andererseits noch nicht zu dick oder zu schwer sind, um im Schalenteil eines Sportschuhs unterbracht zu werden.

Von Vorteil sind auch die Maßnahmen gemäß Anspruch 5, da dadurch die Durchbrüche im formstabilen Bereich des Schalenteils ausgebildet sind. Wird beispielsweise eine Achse, welche einen ersten Schalenteil mit einem zweiten Schalenteil verbindet, durch diesen Durchbruch geführt, so ist diese Achse einerseits solide gelagert, andererseits ist auch eine sehr gute und direkte Kraftübertragung von der Achse auf das Schuhversteifungselement sichergestellt.

Vorteilhaft ist auch die Ausgestaltung nach Anspruch 6, da dadurch eine verbesserte Formschlüssigkeit zwischen Schuhversteifungsteil und Kunststoffteil erreicht wird, wodurch die Stabilität der Verbindung gesteigert wird.

Durch die vorteilhaften Maßnahmen gemäß Anspruch 7 wird der Formschluss zwischen Schuhversteifungsteil und Kunststoffteil weiter verbessert, sodass die Verbindung noch widerstandsfähiger gegenüber Belastungen ist. Ein Herausgleiten der Verbindungselemente aus der Umschließung durch den Kunststoff wird damit so gut wie unmöglich gemacht.

Von Vorteil sind weiters die Maßnahmen gemäß Anspruch 8, da dadurch die Qualität des Formschlusses zwischen Schuhversteifungsteil und Kunststoffteil noch weiter verbessert wird.

Von Vorteil sind auch die Maßnahmen gemäß Anspruch 9, da dadurch an mehreren Stellen des Schalenteils eine Erhöhung der Steifigkeit bzw. Stabilität erwirkt wird. Es kann also der Schalenteil ganz gezielt an jenen Stellen in seiner Biegesteifigkeit beeinflusst werden, in denen eine erhöhte Steifigkeit bzw. Stabilität gewünscht ist bzw. wo aufgrund der auftretenden Kräfte im oder am Schalenteil eine solche Versteifung notwendig ist.

Bei den Maßnahmen gemäß Anspruch 10 ist von Vorteil, dass der Schalenteil vom Schuhversteifungsteil genau in jenen Bereichen verstärkt wird, in denen in sehr vielen Fällen eine erhöhte Stabilität bzw. Steifigkeit gefordert wird. Handeltes sich beispielsweise bei dem Sportschuh, für den ein erfindungsgemäßes Schalenteil hergestellt wird, um einen Schischuh, so wird eine erhöhte Stabilität des Schalenteils vor allem im Bereich der Ferse und im Bereich des Vorderfußes benötigt. Das sind genau jene Bereiche, in denen bei Schischuhen Sohlenfortsätze ausgebildet sind, welche eine formschlüssige Verbindung mit einer Bindungsvorrichtung eingehen. Eine erhöhte Steifigkeit bzw. Stabilität in diesen Bereichen ist von Vorteil, da dadurch eine direktere und verzögerungsfreie Kraftübertragung sichergestellt ist und da in diesen Bereichen sehr hohe Kräfte auftreten können. Ein weiterer Bereich, in dem es sehr vorteilhaft ist, einen Schuhversteifungsteil zu positionieren, ist der Sohlenbereich eines Sportschuhs. Durch Platzieren eines Schuhversteifungsteils in diesem Bereich wird dort die Biege- bzw. Torsionssteifigkeit des Sportschuhs erhöht, was beispielsweise bei einem Schischuh ein schnelleres bzw. aggressiveres Fahren erlaubt.

Von Vorteil sind auch die Maßnahmen gemäß Anspruch 11, da die genannten Materialien leichtgewichtig, sehr gut bearbeitbar sind und in unterschiedliche, dreidimensionale Formen gebracht werden können. Durch die Verwendung der unterschiedlichen Materialien bzw. durch Variation der Stoffparameter des jeweiligen Materials können Füllmaterialien mit den unterschiedlichsten Eigenschaften eingesetzt werden. Insbesondere kann die Härte des Füllmaterials entsprechend den jeweiligen Anforderungen einfach angepasst werden.

Von Vorteil sind weiters die Maßnahmen gemäß Anspruch 12, da dadurch die Dicke des Schuhversteifungsteils mit dem aufgebrachten Füllmaterial in etwa der Dicke des Kunststoffteils entspricht, welche den Schuhversteifungsteil umschließt. Somit bilden der Schuhversteifungsteil mit dem aufgebrachten Füllmaterial und das daran anschließende Kunststoffteil ein einstückiges Schalenteil aus, welches keine abrupten, stufigen Übergänge an seiner Innenseite aufweist.

Von Vorteil sind auch die Maßnahmen gemäß Anspruch 13, da dadurch ein Schalenteil gebildet wird, bei welchem vor allem die Innenseite sehr gut bearbeitet bzw. angepasst werden kann. Es muss dabei nicht das hochstabile Schuhversteifungsteil bearbeitet werden, sondern nur das gegenüber dem Schuhversteifungsteil vergleichsweise leicht zu bearbeitende Füllmaterial.

Von Vorteil ist auch eine Ausgestaltung nach Anspruch 14, da dadurch Füllmaterial gebildet wird, dessen dreidimensionale Form, insbesondere die Form der vom Schuhversteifungsteil abgewandten Innenseite des Füllmaterials, dessen Materialeigenschaften, insbesondere die Härte des Füllmaterials, und/oder dessen Haptik exakt und individuell an die Bedürfnisse bzw. Wünsche eines Benutzers angepasst werden. Eine solche Anpassung ist auf einfache Art und Weise möglich, da das Füllmaterial im Vergleich zum Schuhversteifungsteil sehr einfach zu bearbeiten ist.

Von Vorteil sind auch die Maßnahmen gemäß Anspruch 15, da dadurch die Möglichkeit geschaffen ist, dass die dreidimensionale, vom Schuhversteifungsteil abgewandte Innenseite des Füllmaterials und damit zumindest ein Teil der Innenseite des Schalenteils in ihrer Form und/oder Haptik auch nachträglich und individuell an die speziellen Bedürfnisse bzw. Wünsche eines Benutzers des Sportschuhs anpassbar ist bzw. das Füllmaterial entsprechend nachbearbeitbar ist. Ein solcher Wunsch kann sich beispielsweise bei Personen mit speziellen Fußformen oder bei Personen, dessen Füße Überbeine aufweisen, ergeben. Auf solche speziellen Wünsche bzw. Bedürfnisse kann nun auf einfache Art und Weise nachträglich reagiert werden, wobei die Stabilität bzw. Steifigkeit des Schalenteils nicht beeinflusst wird, da die Schuhversteifungsteile nicht bearbeitet werden.

Die Aufgabe der Erfindung, insbesondere die zweite genannte Aufgabe der Erfindung, wird eigenständig auch durch einen Schalenteil eines Sportschuhs gemäß den Ansprüchen 16 bis 20 gelöst.

Die durch die Maßnahmen gemäß den Ansprüchen 16 bis 20 erzielten technischen Effekte bzw. Vorteile sind den vorhergehenden Beschreibungsteilen, insbesondere den Vorteilsnennungen zu den entsprechenden Ansprüchen 1 bis 15 zu entnehmen.

Zum besseren Verständnis der Erfindung wird diese anhand der nachfolgenden Figuren näher erläutert.

Es zeigen jeweils in stark vereinfachter, schematischer Darstellung:
- Fig. 1: einen formstabilen Schuhversteifungsteil für den Fersen- bzw. Knöchelbereich eines Sportschuhs;
- Fig. 2: einen formstabilen Schuhversteifungsteil mit innen aufgebrachtem, vergleichsweise leicht bearbeitbarem Füllmaterial;
- Fig. 3: einen innenschuhförmigen Leisten mit im Fersen- bzw. Knöchelbereich aufgesetztem, formstabilen Schuhversteifungsteil;
- Fig. 4: den mit Kunststoff umspritzten Leisten bzw. formstabilen Schuhversteifungsteil;
- Fig. 5: einen Längsschnitt durch einen Schalenteil eines Sportschuhs entlang der Mittelachse;
- Fig. 6: einen Querschnitt durch einen Schalenteil eines Sportschuhs im Bereich der Durchbrüche des Schuhversteifungsteils.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

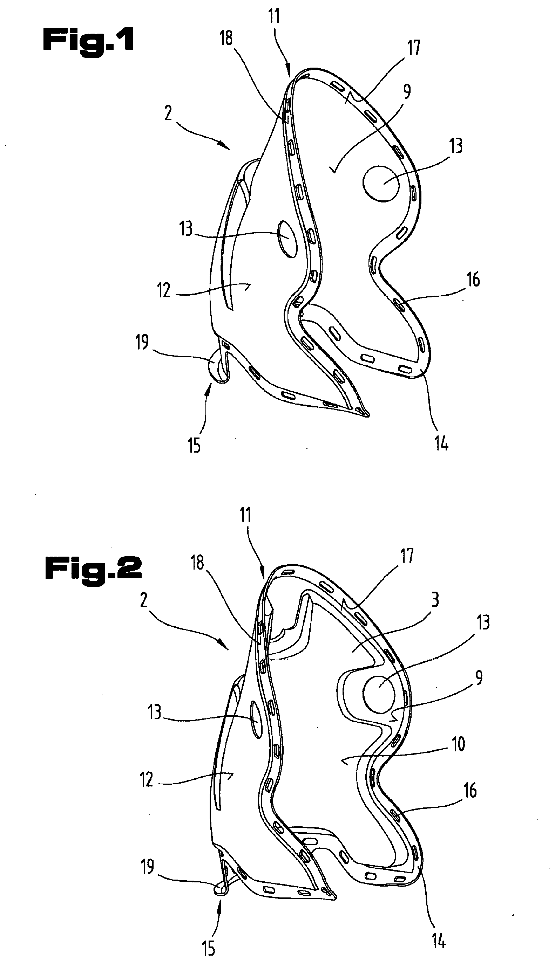

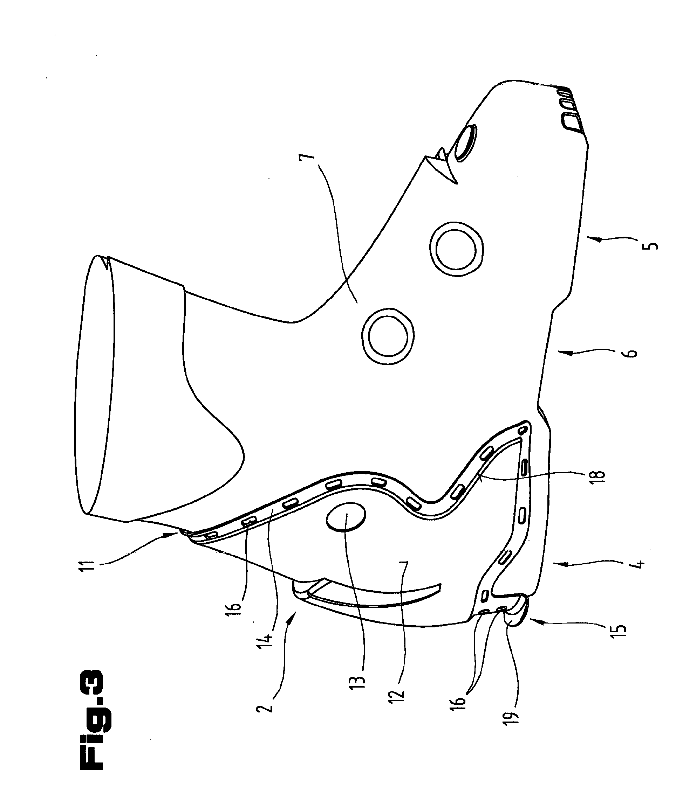

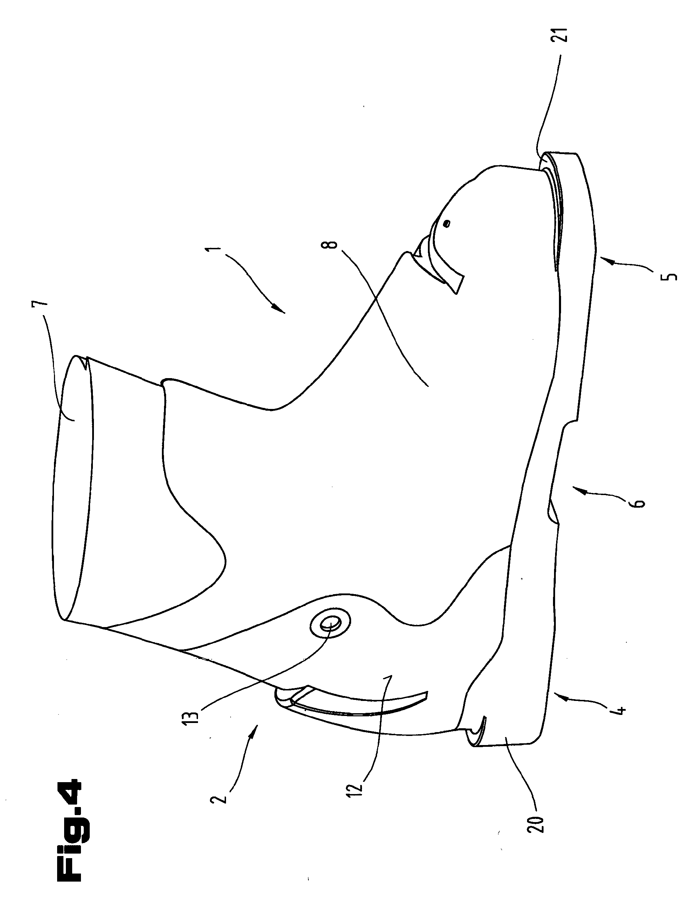

In Fig. 1 ist ein Ausführungsbeispiel eines dreidimensionalen Schuhversteifungsteils 2, welcher eine Komponente zur Stabilisierung des Fersenbereichs 4 bzw. des Knöchelbereichs des Schalenteils 1 eines Sportschuhs bildet, beispielhaft veranschaulicht. Der Fig. 2 ist ein dreidimensionales Schuhversteifungsteil 2 mit aufgebrachtem Füllmaterial 3 zu entnehmen. Fig. 3 zeigt beispielhaft ein im Fersenbereich 4 des innenschuhförmigen Leistens 7 angebrachtes bzw. positioniertes Schuhversteifungsteil 2 mit innen angebrachtem Füllmaterial 3. In Fig. 4 ist beispielhaft dargestellt, wie ein Kunststoffteil 8 auf den Leisten 7 aufgespritzt ist und den Schuhversteifungsteil 2 umschließt.

Das erfindungsgemäße Verfahren zur Herstellung eines Schalenteils 1 eines Sportschuhs, insbesondere der Vorderfußschale eines Schischuhs, basiert auf dem Zusammenfügen mehrerer, bevorzugt aus unterschiedlichen Materialien bestehender Komponenten des Schalenteils 1 in einem oder mehreren Spritzgießvorgängen. Wesentlich dabei ist, dass in einem ersten Schritt zumindest ein dreidimensionales, formstabiles Schuhversteifungsteil 2 hergestellt wird. Das dargestellte Schuhversteifungsteil 2 verleiht dem fertigen Schalenteil 1 eines Sportschuhs in dessen Fersenbereich 4 eine hohe Stabilität bzw. Biegesteifigkeit. Wegen der Verwendung von hochstabilen Materialien für den Schuhversteifungsteil 2 ist die Verarbeitung bzw. Anpassung dieses Teils relativ schwierig bzw. aufwendig. Aus diesem Grund wird in einem nächsten Verfahrensschritt auf der Innenseite des Schuhversteifungsteils ein vergleichsweise leicht zu bearbeitendes Füllmaterial 3 aufgebracht. Das Füllmaterial 3 wird dabei so geformt, dass die dreidimensionale, vom Schuhversteifungsteil 2 abgewandte Innenseite 10 des Füllmaterials 3 zu einem überwiegenden Teil der Form des Leistens 7 folgt.

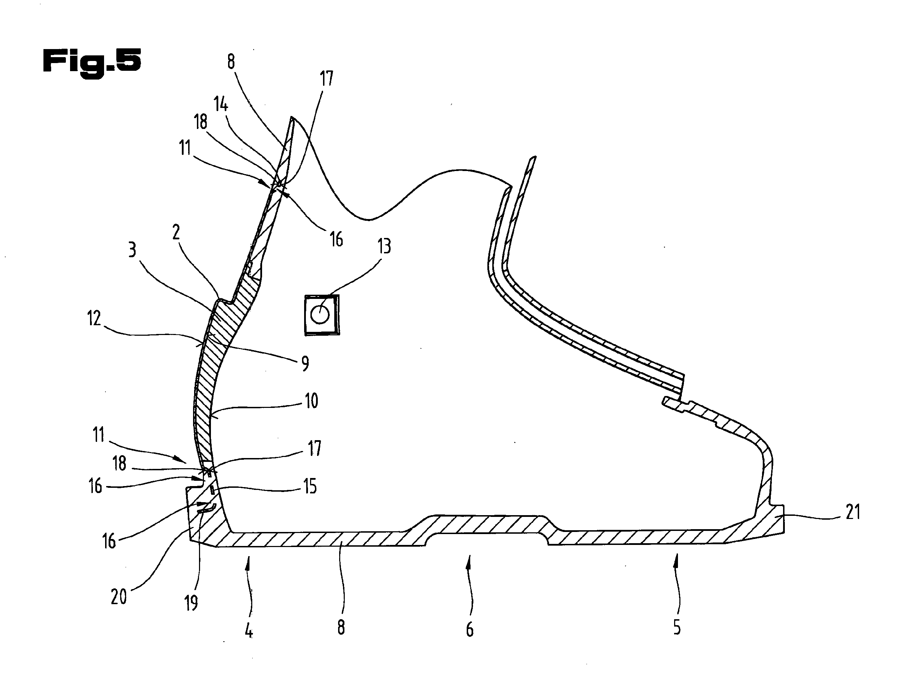

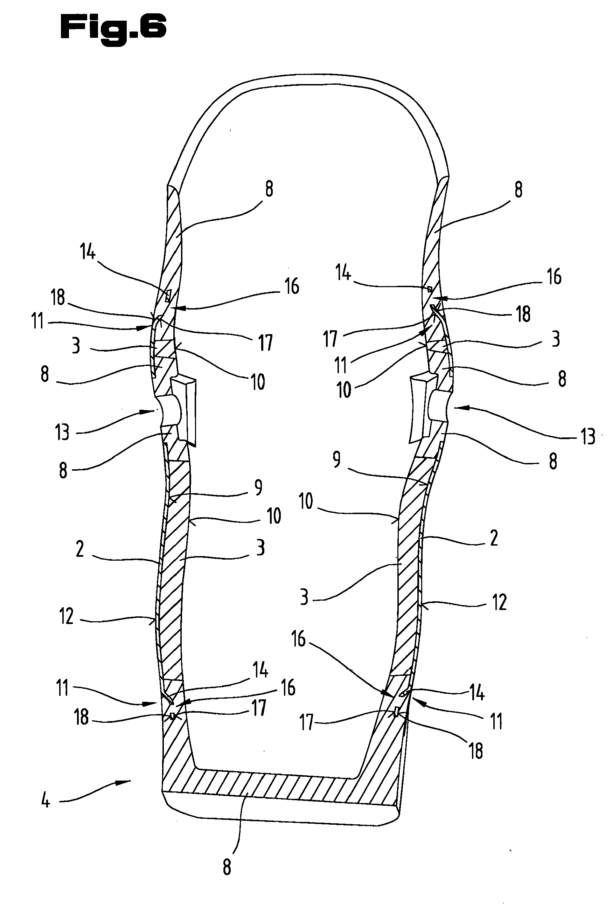

Zweckmäßig ist es, wenn das vergleichsweise leicht zu bearbeitende Füllmaterial 3 auf zumindest 50 %, insbesondere mehr als 75 %, bevorzugt 90 % bis 100 % der Innenfläche 9 des Schuhversteifungsteils 2 aufgebracht ist. Durch das Aufbringen des Füllmaterials 3 auf der Innenseite 9 des Schuhversteifungsteils entsteht ein Verbundteil, dessen Innenseite 10 vergleichsweise leicht bearbeitbar bzw. anpassbar ist. Es entsteht also ein Verbundteil, das sowohl eine hohe Steifigkeit als auch eine gute Bearbeitbarkeit aufweist. In einem nächsten Schritt des erfindungsgemäßen Verfahrens wird das mit dem Füllmaterial 3 ausgestattete Schuhversteifungsteil 2 im Fersenbereich 4 des Leistens 7 angebracht bzw. positioniert. Dies ist problemlos möglich, da das auf der Innenseite 9 des Schuhversteifungsteils angebrachte Füllmaterial 3 eine Innenseite 10 aufweist, dessen dreidimensionale Form zu einem überwiegenden Teil der Form des Leistens 7 angepasst ist. In einem letzten Verfahrensschritt wird der noch freie Bereich des Leistens 7 mit einem Kunststoff umspritzt, sodass ein Kunststoffteil 8 entsteht, der auch den formstabilen Schuhversteifungsteil 2 zumindest teilweise umschließt und somit ein einstückiges Schalenteil 1 eines Sportschuhs bildet. Die Anordnung der Komponenten Schuhversteifungsteil 2, Füllmaterial 3 und Kunststoffteil 8 ist besonders anschaulich in den Schnittdarstellungen in den Fig. 5 und 6 ersichtlich.

Entsprechend einer zweckmäßigen Ausführungsform wird der Randabschnitt 11 des Schuhversteifungsteils 2 zumindest teilweise mit Kunststoff umspritzt, sodass ein einstückiger Schalenteil 1 eines Sportschuhs gebildet wird, bei dem die Komponenten Schuhversteifungsteil 2 und Kunststoffteil 8 zuverlässig und formschlüssig miteinander verbunden sind. Entsprechend einem nicht gezeigten Ausführungsbeispiel umschließt der Kunststoffteil 8 auch zumindest einen Teil der Außenseite 12 des Schuhversteifungsteils 2, wodurch unter anderem ein noch beständigerer Formschluss zwischen den Komponenten des Schalenteils 1 erreicht wird.

Die Innenseite 9 des Schuhversteifungsteils 2 muss im erfindungsgemäßen Verfahren größtenteils nicht mit Kunststoff umspritzt werden, da diese Innenseite 9 bereits zu einem überwiegenden Teil vom Füllmaterial 3 bedeckt ist. Somit ist es beim Spritzgießvorgang zur Herstellung des Kunststoffteils 8 nicht mehr nötig, dafür Sorge zu tragen, dass der Kunststoff auch den gesamten vorgesehenen Bereich unterhalb des Schuhversteifungsteils 2 erreicht. Das erfindungsgemäße Verfahren vereinfacht auf diese Weise den Herstellungsprozess des Schalenteils 1 eines Sportschuhs.

Bevorzugt ist der dreidimensionale, formstabile Schuhversteifungsteil 2 aus Metall oder einem Faserverbundstoff wie beispielsweise einem kohlefaserverstärkten Kunststoff, einem glasfaserverstärkten Kunststoff, einem kohle- und glasfaserverstärkten Kunststoff, einem Aramidfaser-Verbundstoff oder einem Basaltfaser-Verbundstoff hergestellt. Grundsätzlich ist der Verarbeitungsprozess dieser hochstabilen Materialien technisch ausgereift, jedoch ist deren Be- bzw. Verarbeitung beispielsweise im Vergleich zu spritzgegossenen Kunststoffen relativ aufwendig.

Zweckmäßig ist es, wenn die Dicke des dreidimensionalen, formstabilen Schuhversteifungsteils 2 0,6 mm bis 1,5 mm, bevorzugt 0,9 mm bis 1,2 mm beträgt. Das so gebildete Schuhversteifungsteil 2 weist einerseits genügend Stabilität bzw. Steifigkeit auf und andererseits sind dessen Gewicht und Abmessungen in ihrer Größenordnung so beschaffen, dass das Schuhversteifungsteil 2 gut im Schalenteil 1 eines Sportschuhs integriert werden kann.

Entsprechend einer besonders vorteilhaften Ausführungsform weist der dreidimensionale, formstabile Schuhversteifungsteil 2 einen oder mehrere, insbesondere runde, Durchbrüche 13 zwischen Innen- (9) und Außenseite (12) auf. Diese Durchbrüche 13 werden weder vom Füllmaterial 3 noch vom Kunststoffteil 8 gänzlich verschlossen. Sie dienen beispielsweise zur Aufnahme eines Achselements, welches den Schalenteil 1 mit einem weiteren Schalenteil beweglich verbindet.

Entsprechend einer besonders zweckmäßigen Ausführungsform sind im Randabschnitt 11 des dreidimensionalen, formstabilen Schuhversteifungsteils 2 ein oder mehrere Verbindungselemente 14, 15 ausgebildet. Im Verlauf des erfindungsgemäßen Verfahrens werden bei der Umspritzung des Schuhversteifungsteils 2 diese Verbindungselemente 14, 15 vom Kunststoffteil 8 umschlossen, sodass eine sehr stabile und zuverlässige Verbindung zwischen dem Schuhversteifungsteil 2 und dem Kunststoffteil 8 gebildet wird. Während des Umspritzens des Schuhversteifungsteils 2 mit dem Kunststoff bildet sich eine form- und kraftschlüssige Verbindung zwischen den beiden Komponenten aus. Je nach den verwendeten Materialien für den Schuhversteifungsteil 2 und den Kunststoffteil 8 und den Parametern des Spritzgießprozesses, beispielsweise der Temperatur der Formmasse, bildet sich ebenso eine stoffschlüssige Verbindung zwischen den beiden Komponenten aus, bei der diese Teile eine chemische Verbindung eingehen. Besonders anschaulich zeigen die Schnittdarstellungen in den Fig. 5 und 6, wie die Verbindungselemente 14, 15 im Randabschnitt 11 des dreidimensionalen, formstabilen Schuhversteifungsteils 2 vom Kunststoffteil 8 umschlossen sind.

Um die Stabilität bzw. Beständigkeit der Verbindung zwischen dem dreidimensionalen, formstabilen Schuhversteifungsteil 2 und dem Kunststoffteil 8 weiter zu erhöhen, ist es zweckmäßig, die Verbindungselemente 14, 15 mit Durchbrüchen 16 auszustatten. Beim Umspritzen des Schuhversteifungsteils 2 mit dem Kunststoff werden diese Durchbrüche 16 mit dem Kunststoff gefüllt und es bildet sich eine stabilere und zuverlässigere Verbindung zwischen dem Schuhversteifungsteil 2 und dem Kunststoffteil 8. Die Schnittdarstellungen in den Fig. 5 und 6 zeigen besonders anschaulich, wie die Durchbrüche 16 der Verbindungselemente 14, 15 des dreidimensionalen, formstabilen Schuhversteifungsteils 2 mit dem Kunststoff gefüllt sind.

Eine weitere zweckmäßige Vorgangsweise zur Erhöhung der Stabilität bzw. Beständigkeit der Verbindung zwischen Schuhversteifungsteil 2 und Kunststoffteil 8 stellt das vollständige Umspritzen der Verbindungselemente 14, 15 sowohl an deren Außenseite 18 als auch an deren Innenseite 17 mit einem Kunststoff dar. Bei einem nach diesem Verfahren hergestellten Schalenteil 1 für einen Sportschuh stehen also beide Seiten 17, 18 der Verbindungselemente 14, 15 mit dem Kunststoffteil 8 in Verbindung und sind daher zuverlässig und stabil verbunden. Diese Ausführungsform ist besonders anschaulich in den Schnittdarstellungen in den Fig. 5 und 6 dargestellt.

Durch eine Vergrößerung der Breite der Verbindungselemente 14, 15 bildet sich bei der Überspritzung mit dem Kunststoff ein größerer Überdeckungsbereich zwischen den Verbindungselementen 14, 15 und dem Kunststoffteil 8 aus, sodass die Stabilität der Verbindung zwischen Schuhversteifungsteil 2 und Kunststoffteil 8 erhöht ist. Ebenso ist es zweckmäßig, die Robustheit bzw. Stabilität der Verbindung zwischen Schuhversteifungsteil 2 und Kunststoffteil 8 durch die Ausbildung eines Querelementes 19 beispielsweise am Verbindungselement 15 zu erhöhen, wie dies besonders anschaulich in der Schnittdarstellung in Fig. 5 ersichtlich ist. Das Querelement 19 erstreckt sich quer zur Ausdehnungsrichtung des Verbindungselements 15 und wirkt somit einem Auseinandergehen bzw. Auseinanderreißen von Schuhversteifungsteil 2 und Kunststoffteil 8 entgegen.

Entsprechend einer vorteilhaften Ausführungsform sind im Schalenteil 1 eines Sportschuhs mehrere mit einem Füllmaterial 3 ausgestattete Schuhversteifungsteile 2 integriert. Neben der in den Ausführungsbeispielen gezeigten Positionierung eines Schuhversteifungsteils 2 im Fersenbereich 4 bzw. Knöchelbereich des Schalenteils 1 eines Sportschuhs, ist es ebenso zweckmäßig, einen Schuhversteifungsteil 2 im Zehenbereich 5 und/oder im Sohlenbereich 6 zu positionieren. Damit wird die Starrheit und die Biege- und Torsionssteifigkeit des Schalenteils 1 in diesen Bereichen erhöht. Der so hergestellte Schalenteil 1 eines Sportschuhs stützt dadurch den Fersen- bzw. Knöchelbereich, den Vorfußbereich und/oder den Fußsohlenbereich eines Benutzers des Sportschuhs.

Es wird aber nicht nur die Biegesteifigkeit des Schalenteils 1 erhöht, sondern der Schalenteil 1 ist in den Bereichen der Schuhversteifungsteile 2 auch robuster gegenüber Belastungen bzw. Kräften, die von außen auf das Schalenteil 1 wirken. Weiters verbessert die Nähe des Schuhversteifungsteils 2 bzw. des Verbindungselements 15 zum hinteren Sohlenfortsatz 20 des Schalenteils 1 die Kraftübertragungseigenschaften zu einem Bindungselement, in welches das Schalenteil 1 eingesetzt werden kann. In einem nicht gezeigten Ausführungsbeispiel eines Schuhversteifungsteils 2 für den Zehenbereich 5 eines Schalenteils 1 eines Sportschuhs ist es ebenso zweckmäßig, im Bereich eines vorderen Sohlenfortsatzes 21 einen Schuhversteifungsteil 2 für den Zehenbereich 5 bzw. dessen entsprechendes Verbindungselement 15 zu positionieren.

Bevorzugt besteht das gegenüber dem Schuhversteifungsteil 2 vergleichsweise leicht zu bearbeitende Füllmaterial 3, welches auf zumindest einem Teil der Innenfläche 9 des Schuhversteifungsteils 2 aufgebracht ist, aus einem Kunststoffschaum wie beispielsweise aufgeschäumtes Polystyrol, Polyurethan-Schaumstoff oder Polypropylen-Schaumstoff. Diese Materialien können auf einfache Art und Weise in verschiedenste Formen gebracht werden und durch Variation ihrer stofflichen Zusammensetzung und ihrer Verarbeitungsverfahren können auch ihre Materialeigenschaften wie beispielsweise die Härte angepasst werden, sodass im Speziellen auch die Haptik des Füllmaterials 3 an die Bedürfnisse bzw. Wünsche eines Benutzers des Sportschuhs angepasst werden kann. Entsprechend einer zweckmäßigen Ausführungsform weist das vergleichsweise leicht zu bearbeitende Füllmaterial 3 eine Dicke von 1 mm bis 12 mm, bevorzugt 2 mm bis 7 mm auf. Die sich dadurch ergebende Gesamtdicke des Verbundteils bestehend aus Schuhversteifungsteil 2 und innen aufgebrachtem Füllmaterial 3 entspricht dadurch in etwa der Dicke des Kunststoffteils 8, sodass ein einstückiges Schalenteil 1 mit verlaufenden Übergängen zwischen dem Schuhversteifungsteil 2 bzw. Füllmaterial 3 und dem Kunststoffteil 8 ausgebildet ist.

Zweckmäßig ist es, wenn das auf der Innenfläche 9 des Schuhversteifungsteils 2 aufgebrachte Füllmaterial 3 insbesondere sehr gut gefräst, geschnitten, geschabt, geschliffen und/oder nach Wärmeeinwirkung verformt werden kann. Dies ermöglicht es einerseits, dass insbesondere die Innenseite 10 des Füllmaterials 3 bei der Herstellung des Schalenteils 1 in die unterschiedlichen, an die Bedürfnisse der Benutzer des Sportschuhs angepassten dreidimensionalen Formen gebracht werden kann und/oder dessen Haptik angepasst werden kann. Andererseits ist es damit auch möglich, die dreidimensionale Form des Füllmaterials 3, insbesondere dessen Innenseite 10, und/oder die Haptik des Füllmaterials 3 gemäß den speziellen bzw. individuellen Bedürfnissen eines Benutzers des Sportschuhs durch Nachbearbeitung nachträglich anzupassen. Ein solcher Wunsch kann sich beispielsweise bei Personen mit speziellen Fußformen oder bei Personen, dessen Füße Überbeine aufweisen, ergeben. Vor dem Bearbeiten des Füllmaterials 3 wird dazu zweckmäßiger Weise eine 3D-Vermessung der individuellen Fußform des Benutzers des Sportschuhs durchgeführt.

Für das Herstellungsverfahren des Schalenteils 1 ist es weiters zweckmäßig, das formstabile Schuhversteifungsteil 2 bezüglich seiner Abmessungen individuell für jede bereitzustellende Schuhgröße des Sportschuhs herzustellen.

Der Ordnung halber sei abschließend darauf hingewiesen, dass zum besseren Verständnis des Aufbaus des Schalenteils eines Sportschuhs dieser bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Schalenteil
- 2: Schuhversteifungsteil
- 3: Füllmaterial
- 4: Fersenbereich
- 5: Zehenbereich

- 6: Sohlenbereich
- 7: Leisten
- 8: Kunststoffteil
- 9: Innenseite des Schuhversteifungsteils
- 10: Innenseite des Füllmaterials

- 11: Randabschnitt des Schuhversteifungsteils
- 12: Außenseite des Schuhversteifungsteils
- 13: Durchbruch
- 14: Verbindungselement
- 15: Verbindungselement

- 16: Durchbruch
- 17: Innenseite des Verbindungselements
- 18: Außenseite des Verbindungselements
- 19: Querelement
- 20: Hinterer Sohlenfortsatz

- 21: vorderer Sohlenfortsatz

## Patentansprüche

1. Verfahren zur Herstellung eines Schalenteils (1) eines Sportschuhs, insbesondere der Vorderfußschale eines Schischuhs, basierend auf dem Zusammenfügen mehrerer, bevorzugt aus unterschiedlichen Materialien bestehender Komponenten des Schalenteils (1) in einem oder mehreren Spritzgießvorgängen, **gekennzeichnet durch** Herstellen zumindest eines dreidimensionalen, formstabilen Schuhversteifungsteils (2), Aufbringen eines gegenüber dem Schuhversteifungsteil (2) vergleichsweise leicht bearbeitbaren Füllmaterials (3) auf zumindest 50 %, insbesondere mehr als 75 %, bevorzugt 90 % bis 100 % der Innenfläche (9) des Schuhversteifungsteils (2), sodass die dreidimensionale, vom Schuhversteifungsteil (2) abgewandte Innenseite (10) des Füllmaterials (3) zu einem überwiegenden Teil der Form eines Leistens (7) folgt, Anbringen bzw. Positionieren des mit dem Füllmaterial (3) ausgestatteten Schuhversteifungsteils (2) auf dem Leisten (7) und zumindest teilweises Umspritzen des Schuhversteifungsteils (2) mit einem Kunststoff (8), sodass ein einstückiger Schalenteil (1) eines Sportschuhs gebildet wird.

2. Verfahren nach Anspruch 1 , **gekennzeichnet durch** ein zumindest teilweises Umspritzen des Randabschnitts (11) des Schuhversteifungsteils (2) und wahlweise ein zumindest teilweises Umspritzen der Außenseite (12) des Schuhversteifungsteils (2) mit einem Kunststoff (8), sodass ein einstückiger Schalenteil (1) eines Sportschuhs gebildet wird.

3. Verfahren nach Anspruch 1 oder 2, **gekennzeichnet durch** Herstellen eines dreidimensionalen, formstabilen Schuhversteifungsteils (2) aus einem Metall, insbesondere Stahl, aus einem Faserverbundstoff, insbesondere kohlefaserverstärkter Kunststoff, glasfaserverstärkter Kunststoff, kohle- und glasfaserverstärkter Kunststoff, Aramidfaser-Verbundstoff oder Basaltfaser-Verbundstoff, oder aus einem formstabilen Material mit einem Elastizitätsmodul von 40 GPa bis 240 GPa, bevorzugt mit einem Elastizitätsmodul von 120 GPa bis 200 GPa.

4. Verfahren nach einem der vorhergehenden Ansprüche, **gekennzeichnet durch** Herstellen eines dreidimensionalen, formstabilen Schuhversteifungsteils (2) mit einer Dicke von 0,6 mm bis 1,5 mm, bevorzugt mit einer Dicke von 0,9 mm bis 1,2 mm.

5. Verfahren nach einem der vorhergehenden Ansprüche, **gekennzeichnet durch** Herstellen eines dreidimensionalen, formstabilen Schuhversteifungsteils (2), welcher eine oder mehrere, insbesondere runde, Durchbrüche (13) zwischen Innen- (9) und Außenseite (12) aufweist.

6. Verfahren nach einem der vorhergehenden Ansprüche, **gekennzeichnet durch** Herstellen eines dreidimensionalen, formstabilen Schuhversteifungsteils (2) mit einem oder mehreren in dessen Randabschnitt (11) angeordneten Verbindungselementen (14, 15) und Umspritzen dieser Verbindungselemente (14, 15) mit einem Kunststoff (8), sodass eine sehr stabile Verbindung zwischen dem Schuhversteifungsteil (2) und dem Kunststoff (8) ausgebildet ist.

7. Verfahren nach Anspruch 6, **gekennzeichnet durch** Herstellen eines dreidimensionalen, formstabilen Schuhversteifungsteils (2) mit einem oder mehreren in dessen Randabschnitt (11) angeordneten Verbindungselementen (14, 15), wobei die Verbindungselemente (14, 15) Durchbrüche (16) zwischen Innen- (17) und Außenseite (18) aufweisen und Umspritzen dieser Verbindungselemente (14, 15) mit einem Kunststoff (8), wobei die Durchbrüche (16) ebenso mit dem Kunststoff (8) gefüllt werden.

8. Verfahren nach Anspruch 6 oder 7, **gekennzeichnet durch** vollständiges Umspritzen der Verbindungselemente (14, 15) mit einem Kunststoff (8), sodass sowohl die Außenseite (18) als auch die Innenseite (17) der Verbindungselemente (14, 15) mit dem Kunststoff (8) umschlossen sind.

9. Verfahren nach einem der vorhergehenden Ansprüche, **gekennzeichnet durch** Anbringen bzw. Positionieren von mehreren mit einem Füllmaterial (3) ausgestatteten Schuhversteifungsteilen (2) auf einem Leisten(7) und zumindest teilweises Umspritzen dieser Schuhversteifungsteile (2) mit einem Kunststoff (8).

10. Verfahren nach einem der vorhergehenden Ansprüche, **gekennzeichnet durch** Anbringen bzw. Positionieren von jeweils einem mit einem Füllmaterial (3) ausgestatteten Schuhversteifungsteil (2) auf einem Leisten (7) im Fersenbereich (4), im Zehenbereich (5) und/oder im Sohlenbereich (6) des Sportschuhs, sodass im jeweiligen Bereich die Starrheit und Biegesteifigkeit des Schalenteils (1) erhöht wird.

11. Verfahren nach einem der vorhergehenden Ansprüche, **gekennzeichnet durch** Aufbringen eines gegenüber dem Schuhversteifungsteil (2) vergleichsweise leicht bearbeitbaren Füllmaterials (3) auf zumindest einem Teil der Innenfläche (9) des Schuhversteifungsteils (2), wobei als Füllmaterial (3) ein Kunststoffschaum, insbesondere aufgeschäumtes Polystyrol, Polyurethan-Schaumstoff oder Polypropylen-Schaumstoff, eingesetzt wird.

12. Verfahren nach einem der vorhergehenden Ansprüche, **gekennzeichnet durch** Aufbringen eines gegenüber dem Schuhversteifungsteil (2) vergleichsweise leicht bearbeitbaren Füllmaterials (3) auf zumindest einem Teil der Innenfläche (9) des Schuhversteifungsteils (2), wobei die Dicke des Füllmaterials (3) 1 mm bis 12 mm, bevorzugt 2 mm bis 7 mm beträgt.

13. Verfahren nach einem der vorhergehenden Ansprüche, **gekennzeichnet durch** Aufbringen eines gegenüber dem Schuhversteifungsteil (2) vergleichsweise leicht bearbeitbaren Füllmaterials (3) auf zumindest einem Teil der Innenfläche (9) des Schuhversteifungsteils (2), welches Füllmaterial (3) insbesondere sehr gut gefräst, geschnitten, geschabt, geschliffen und/oder nach Wärmeeinwirkung verformt werden kann.

14. Verfahren nach einem der vorhergehenden Ansprüche, **gekennzeichnet durch** individuelles Anpassen der dreidimensionalen Form, insbesondere der Form der vom Schuhversteifungsteil (2) abgewandten Innenseite (10), der Materialeigenschaften, insbesondere der Härte, und/oder der Haptik des Füllmaterials (3) an die Bedürfnisse bzw. Wünsche eines Benutzers des Sportschuhs.

15. Verfahren nach einem der vorhergehenden Ansprüche, **gekennzeichnet durch** nachträgliches Anpassen bzw. Nachbearbeiten der dreidimensionalen Form und/oder der Haptik des Füllmaterials (3) gemäß den speziellen bzw. individuellen Bedürfnissen eines Benutzers des Sportschuhs insbesondere **durch** Fräsen, Schneiden, Schaben, Schleifen und/oder Verformen nach Wärmeeinwirkung.

16. Schalenteil eines Sportschuhs, insbesondere die Vorderfußschale eines Schischuhs, umfassend mehrere, bevorzugt aus unterschiedlichen Materialien bestehende Komponenten, welche in einem oder mehreren Spritzgießvorgängen zum Schalenteil (1) hinzufügbar sind, **dadurch gekennzeichnet, dass** zumindest ein dreidimensionales, formstabiles Schuhversteifungsteil (2) ausgebildet ist, dass auf zumindest 50 %, insbesondere mehr als 75 %, bevorzugt 90 % bis 100 % der Innenfläche (9) des Schuhversteifungsteils (2) ein gegenüber dem Schuhversteifungsteil (2) vergleichsweise leicht bearbeitbares Füllmaterial (3) aufgebracht ist, dessen dreidimensionale, vom Schuhversteifungsteil (2) abgewandte Innenseite (10) die Innenfläche des Schalenteils ausbildet und dass ein spritzgießgeformter Kunststoffteil (8) ausgebildet ist, welcher den Schuhversteifungsteil (2) zumindest teilweise umschließt, um einen einstückigen Schalenteil (1) eines Sportschuhs auszubilden.

17. Schalenteil eines Sportschuhs nach Anspruch 16, **dadurch gekennzeichnet, dass** der dreidimensionale, formstabile Schuhversteifungsteil (2) aus einem Metall, insbesondere Stahl, aus einem Faserverbundstoff, insbesondere kohlefaserverstärkter Kunststoff, glasfaserverstärkter Kunststoff, kohle- und glasfaserverstärkter Kunststoff, Aramidfaser-Verbundstoff oder Basaltfaser-Verbundstoff, oder aus einem formstabilen Material mit einem Elastizitätsmodul von 40 GPa bis 240 GPa, bevorzugt mit einem Elastizitätsmodul von 120 GPa bis 200 GPa, besteht.

18. Schalenteil eines Sportschuhs nach Anspruch 16 oder 17, **dadurch gekennzeichnet, dass** der dreidimensionale, formstabile Schuhversteifungsteil (2) eine Dicke von 0,6 mm bis 1,5 mm, bevorzugt eine Dicke von 0,9 mm bis 1,2 mm aufweist.

19. Schalenteil eines Sportschuhs nach einem der vorhergehenden Ansprüche 16 bis 18,
**dadurch gekennzeichnet, dass** der dreidimensionale, formstabile Schuhversteifungsteil (2) mehrere, insbesondere runde, Durchbrüche (13) zwischen Innen- (9) und Außenseite (12) aufweist.

20. Schalenteil eines Sportschuhs nach einem der vorhergehenden Ansprüche 16 bis 19,
**dadurch gekennzeichnet, dass** als Komponenten des Schalenteils (1) mehrere mit einem Füllmaterial (3) ausgestattete Schuhversteifungsteile (2) ausgebildet und zumindest teilweise vom Kunststoffteil (8) umschlossen sind.

## Claims

1. Method for producing a shell part (1) of a sports shoe, in particular the front foot shell of a ski shoe, based on joining together several components of the shell part (1) preferably made of different materials in one or more injection molding process, **characterized by** producing at least one three-dimensional, dimensionally stable shoe reinforcing part (2), applying a filler material (3) which can be worked comparatively easily compared to the shoe reinforcing part (2) onto at least 50 %, in particular more than 75 %, preferably 90 % to 100 % of the inner surface (9) of the shoe reinforcing part (2), so that the three-dimensional, inner side (10) of the filler material (3) facing away from the shoe reinforcing part (2) follows largely the form of a last (7), applying or positioning the shoe reinforcing part (2) equipped with the filler material (3) on the last (7) and at least partially overmolding the shoe reinforcing part (2) with plastic (8), so that a one-piece shell part (1) of a sports shoe is formed.

2. Method as claimed in claim 1, **characterized by** an at least partial overmolding of the edge section (11) of the shoe reinforcing part (2) and optionally an at least partial overmolding of the outer side (12) of the shoe reinforcing part (2) with plastic (8), so that a one-piece shell part (1) of a sports shoe is formed.

3. Method as claimed in claim 1 or 2, **characterized by** producing a three-dimensional, dimensionally stable shoe reinforcing part (2) made of a metal, in particular steel, a fibrous composite material, in particular a carbon-fiber reinforced plastic, glass-fiber reinforced plastic, carbon and glass-fiber reinforced plastic, aramid fiber composite material or basalt fiber composite material or a dimensionally stable material with a modulus of elasticity of 40 GPa to 240 GPa, preferably with a modulus of elasticity of 120 GPa to 200 GPa.

4. Method as claimed in one of the preceding claims, **characterized by** producing a three-dimensional, dimensionally stable shoe reinforcing part (2) with a thickness of 0.6 mm to 1.5 mm, preferably with a thickness of 0.9 mm to 1.2 mm.

5. Method as claimed in one of the preceding claims, **characterized by** producing a three-dimensional, dimensionally stable shoe reinforcing part (2), which comprises one or more, in particular round, openings (13) between the inner side (9) and outer side (12).

6. Method as claimed in one of the preceding claims, **characterized by** producing a three-dimensional, dimensionally stable shoe reinforcing part (2) with one or more connecting elements (14, 15) arranged in its edge section (11) and overmolding said connecting elements (14, 15) with a plastic (8), so that a very stable connection is formed between the shoe reinforcing part (2) and the plastic (8).

7. Method according to 6, **characterized by** producing a three-dimensional, dimensionally stable shoe reinforcing part (2) with one or more connecting elements (14, 15) arranged in its edge section (11), wherein the connecting elements (14, 15) comprise openings (16) between the inner side (17) and outer side (18) and overmolding said connecting elements (14, 15) with plastic (8), wherein the openings (16) are also filled with the plastic (8).

8. Method as claimed in claim 6 or 7, **characterized by** completely overmolding the connecting elements (14, 15) with plastic (8), so that both the outer side (18) and the inner side (17) of the connecting elements (14, 15) are surrounded by plastic (8).

9. Method as claimed in one of the preceding claims, **characterized by** applying or positioning a plurality of shoe reinforcing parts (2) equipped with a filler material (3) on a last (7) and at least partly overmolding said shoe reinforcing parts (2) with plastic (8).

10. Method as claimed in one of the preceding claims, **characterized by** applying or positioning a shoe reinforcing part (2) provided with a filler material (3) on a last (7) in the heel area (4), in the toe area (5) and/or in the sole area (6) of the sports shoe, so that in the respective area the rigidity and bending resistance of the shell part (1) are increased.

11. Method as claimed in one of the preceding claims, **characterized by** applying a filler material (3) which can be worked comparatively easily compared to the shoe reinforcing part (2) onto at least one part of the inner surface (9) of the shoe reinforcing part (2), wherein as the filler material (3) a plastic foam is used, in particular foamed polystyrene, polyurethane-foam or polypropylene-foam.

12. Method as claimed in one of the preceding claims, **characterized by** applying a filler material (3) which can be worked comparatively easily compared to the shoe reinforcing part (2) onto at least one part of the inner surface (9) of the shoe reinforcing part (2), wherein the thickness of the filler material (3) is 1 mm to 12 mm, preferably 2 mm to 7 mm.

13. Method as claimed in one of the preceding claims, **characterized by** applying a filler material (3) which can be worked comparatively easily compared to the shoe reinforcing part (2) onto at least one part of the inner surface (9) of the shoe reinforcing part (2), which filler material (3) can be easily milled, cut, rasped, ground and/or shaped after heating.

14. Method as claimed in one of the preceding claims, **characterized by** the individual adjustment of the three-dimensional shape, in particular the shape of the inner side (10) facing away from the shoe reinforcing part (2), the material properties, in particular the hardness, and/or haptic of the filler material (3), to the requirements or wishes of a user of the sports shoe.

15. Method as claimed in one of the preceding claims, **characterized by** the subsequent adjustment or post-processing of the three-dimensional shape and/or the haptic of the filler material (3) according to the special or individual requirements of a user of the sports shoe, in particular by milling, cutting, rasping, grinding and/or shaping after heating.

16. Shell part of a sports shoes, in particular the front foot shell of a ski shoe, comprising several components made preferably of different materials, which can be added in one or more injection molding processes to the shell part (1), **characterized in that** at least one three-dimensional, dimensionally stable shoe reinforcing part (2) is formed, **in that** onto at least 50 %, in particular more than 75 %, preferably 90 % to 100 % of the inner surface (9) of the shoe reinforcing part (2) a filler material (3) is applied which can be worked comparatively easily compared to the shoe reinforcing part (2), the three-dimensional inner side (10) of which filler material facing away from the shoe reinforcing part (2) forms the inner surface of the shell part and **in that** an injection molded plastic part (8) is formed, which at least partly surrounds the shoe reinforcing part (2), in order to form a one-piece shell part (1) of a sports shoe.

17. The shell part of a sports shoe as claimed in claim 16 or 17, **characterized in that** the three-dimensional, dimensionally stable shoe reinforcing part (2) is made of a metal, in particular steel, of a fibrous composite material, in particular carbon-fiber reinforced plastic, glass-fiber reinforced plastic, carbon and glass-fiber reinforced plastic, aramid fiber composite material or basalt fiber composite material, or of a dimensionally stable material with a modulus of elasticity of 40 GPa to 240 GPa, preferably with a modulus of elasticity of 120 GPa to 200 GPa.

18. Shell part of a sports shoe as claimed in claim 16 or 17, **characterized in that** the three-dimensional, dimensionally stable shoe reinforcing part (2) has a thickness of 0.6 mm to 1.5 mm, preferably a thickness of 0.9 mm to 1.2 mm.

19. Shell part of a sports shoe as claimed in one of the preceding claims 16 to 18, **characterized in that** the three-dimensional, dimensionally stable shoe reinforcing part (2) comprises a plurality of, in particular round, openings (13) between the inner side (9) and outer side (12).

20. Shell part of a sports shoe as claimed in one of the preceding claims 16 to 19, **characterized in that** as components of the shell part (1) several shoe reinforcing parts (2) provided with a filler material (3) are formed and are surrounded at least partly by the plastic part (8).

## Revendications

1. Procédé de fabrication d'une partie de coque (1) d'une chaussure de sport, en particulier de la coque de pied avant d'une chaussure de ski, basé sur l'assemblage de plusieurs composants de la partie de coque (1), de préférence constitués de matériaux différents, dans une ou plusieurs opérations de moulage par injection, **caractérisé par** la fabrication d'au moins une partie de raidissement de chaussure (2) tridimensionnelle de forme stable, l'application d'un matériau de remplissage (3) comparativement facile à travailler par rapport à la partie de raidissement de la chaussure (2) sur au moins 50 %, en particulier plus de 75 % et de préférence 90 % à 100 % de la surface intérieure (9) de la partie de raidissement de la chaussure (2) de telle sorte que le côté intérieur (10) tridimensionnel du matériau de remplissage (3) opposé à la partie de raidissement de la chaussure (2) épouse dans une partie majoritaire la forme d'une enclume (7), le placement ou le positionnement de la partie de raidissement de la chaussure (2) pourvue du matériau de remplissage (3) sur l'enclume (7) et la pulvérisation au moins partielle de la partie de raidissement de la chaussure (2) avec un matériau plastique (8) de telle sorte qu'une partie de coque (1) d'une seule pièce d'une chaussure de sport soit formée.

2. Procédé selon la revendication 1, **caractérisé par** une pulvérisation au moins partielle de la section de bord (11) de la partie de raidissement de la chaussure (2), et au choix, une pulvérisation au moins partielle du côté extérieur (12) de la partie de raidissement de la chaussure (2) avec un matériau plastique (8) de telle sorte qu'une partie de coque (1) d'une seule pièce d'une chaussure de sport soit formée.

3. Procédé selon la revendication 1 ou 2, **caractérisé par** la fabrication d'une partie de raidissement de la chaussure (2) tridimensionnelle de forme stable à partir d'un métal, en particulier l'acier, à partir d'un matériau composite renforcé aux fibres, en particulier un matériau plastique renforcé aux fibres de carbone, un matériau plastique renforcé aux fibres de verre, un matériau plastique renforcé aux fibres de carbone et de verre, un matériau composite aux fibres aramides ou un matériau composite aux fibres de basalte, ou à partir d'un matériau de forme stable ayant un module d'élasticité de 40 GPa à 240 GPa, de préférence ayant un module d'élasticité de 120 GPa à 200 GPa.

4. Procédé selon l'une des revendications précédentes, **caractérisé par** la fabrication d'une partie de raidissement de la chaussure (2) tridimensionnelle de forme stable ayant une épaisseur de 0,6 mm à 1,5 mm, de préférence ayant une épaisseur de 0,9 mm à 1,2 mm.

5. Procédé selon l'une des revendications précédentes, **caractérisé par** la fabrication d'une partie de raidissement de la chaussure (2) tridimensionnelle de forme stable qui présente une ou plusieurs perforations (13), en particulier de forme ronde, entre le côté intérieur (9) et le côté extérieur (12).

6. Procédé selon l'une des revendications précédentes, **caractérisé par** la fabrication d'une partie de raidissement de la chaussure (2) tridimensionnelle de forme stable comprenant un ou plusieurs éléments de jonction (14, 15) agencés dans sa section de bord (11) et la pulvérisation de ces éléments de jonction (14, 15) avec un matériau plastique (8) de telle sorte qu'une jonction extrêmement stable soit réalisée entre la partie de raidissement de la chaussure (2) et le matériau plastique (8).

7. Procédé selon la revendication 6, **caractérisé par** la fabrication d'une partie de raidissement de la chaussure (2) tridimensionnelle de forme stable comprenant un ou plusieurs éléments de jonction (14, 15) agencés dans sa section de bord (11), étant entendu que les éléments de jonction (14, 15) présentent des perforations (16) entre le côté intérieur (17) et le côté extérieur (18), et la pulvérisation de ces éléments de jonction (14, 15) avec un matériau plastique (8), étant entendu que les perforations (16) sont également remplies par le matériau plastique (8).

8. Procédé selon la revendication 6 ou 7, **caractérisé par** la pulvérisation complète des éléments de jonction (14, 15) avec un matériau plastique (8) de telle sorte qu'à la fois le côté extérieur (18) et le côté intérieur (17) des éléments de jonction (14, 15) sont noyés dans le matériau plastique (8).

9. Procédé selon l'une des revendications précédentes, **caractérisé par** le placement ou le positionnement de plusieurs parties de raidissement de la chaussure (2) pourvues d'un matériau de remplissage (3) sur une enclume (7) et la pulvérisation au moins partielle de ces parties de raidissement de la chaussure (2) avec un matériau plastique (8).

10. Procédé selon l'une des revendications précédentes, **caractérisé par** le placement ou le positionnement d'une partie respective de raidissement de la chaussure (2) pourvue d'un matériau de remplissage (3) sur une enclume (7) dans la zone du talon (4), dans la zone des orteils (5) et/ou dans la zone de la semelle (6) de la chaussure de sport de telle sorte que la rigidité et la résistance à la flexion de la partie de coque (1) sont augmentées dans la zone concernée.

11. Procédé selon l'une des revendications précédentes, **caractérisé par** l'application d'un matériau de remplissage (3) comparativement facile à travailler par rapport à la partie de raidissement de la chaussure (2) sur au moins une partie de la surface intérieure (9) de la partie de raidissement de la chaussure (2), étant entendu qu'une mousse plastique, en particulier du polystyrène moussé, de la mousse de polyuréthanne ou de la mousse de polypropylène, est utilisée comme matériau de remplissage (3).

12. Procédé selon l'une des revendications précédentes, **caractérisé par** l'application d'un matériau de remplissage (3) comparativement facile à travailler par rapport à la partie de raidissement de la chaussure (2) sur au moins une partie de la surface intérieure (9) de la partie de raidissement de la chaussure (2), étant entendu que l'épaisseur du matériau de remplissage (3) est comprise entre 1 mm et 12 mm, et de préférence entre 2 mm et 7 mm.

13. Procédé selon l'une des revendications précédentes, **caractérisé par** l'application d'un matériau de remplissage (3) comparativement facile à travailler par rapport à la partie de raidissement de la chaussure (2) sur au moins une partie de la surface intérieure (9) de la partie de raidissement de la chaussure (2), lequel matériau de remplissage (3) peut en particulier très bien être fraisé, découpé, gratté, meulé et/ou façonné après un effet thermique.

14. Procédé selon l'une des revendications précédentes, **caractérisé par** l'adaptation individuelle de la forme tridimensionnelle, en particulier de la forme du côté intérieur (10) opposé à la partie de raidissement de la chaussure (2), des propriétés des matériaux, en particulier de la dureté, et/ou des propriétés haptiques du matériau de remplissage (3) aux besoins ou aux désirs d'un utilisateur de la chaussure de sport.

15. Procédé selon l'une des revendications précédentes, **caractérisé par** l'adaptation durable ou le post-traitement de la forme tridimensionnelle et/ou des propriétés haptiques du matériau de remplissage (3) en fonction des besoins spéciaux ou individuels d'un utilisateur de la chaussure de sport, en particulier par fraisage, découpe, grattage, meulage et/ou façonnage après un effet thermique.

16. Partie de coque d'une chaussure de sport, en particulier de la coque de pied avant d'une chaussure de ski, comprenant plusieurs composants, de préférence constitués de matériaux différents, qui peuvent être ajoutés à la partie de coque (1) dans une ou plusieurs opérations de moulage par injection, **caractérisée en ce qu'**au moins une partie de raidissement de chaussure (2) tridimensionnelle de forme stable est réalisée, **en ce qu'**un matériau de remplissage (3) comparativement facile à travailler par rapport à la partie de raidissement de la chaussure (2) est appliqué sur au moins 50 %, en particulier plus de 75 % et de préférence 90 % à 100 % de la surface intérieure (9) de la partie de raidissement de la chaussure (2), dont que le côté intérieur (10) tridimensionnel opposé à la partie de raidissement de la chaussure (2) forme la surface intérieure de la partie de coque, et **en ce qu'**une partie en matériau plastique (8) formée par moulage par injection est réalisée, dans laquelle la partie de raidissement de la chaussure (2) est au moins en partie scellée afin de constituer une partie de coque (1) d'une seule pièce d'une chaussure de sport.

17. Partie de coque d'une chaussure de sport selon la revendication 16, **caractérisée en ce que** la partie de raidissement de la chaussure (2) tridimensionnelle de forme stable est constituée d'un métal, en particulier l'acier, d'un matériau composite renforcé aux fibres, en particulier un matériau plastique renforcé aux fibres de carbone, un matériau plastique renforcé aux fibres de verre, un matériau plastique renforcé aux fibres de carbone et de verre, un matériau composite aux fibres aramides ou un matériau composite aux fibres de basalte, ou d'un matériau de forme stable ayant un module d'élasticité de 40 GPa à 240 GPa, de préférence ayant un module d'élasticité de 120 GPa à 200 GPa.

18. Partie de coque d'une chaussure de sport selon la revendication 16 ou 17, **caractérisée en ce que** la partie de raidissement de la chaussure (2) tridimensionnelle de forme stable présente une épaisseur de 0,6 mm à 1,5 mm, de préférence une épaisseur de 0,9 mm à 1,2 mm.

19. Partie de coque d'une chaussure de sport selon l'une des revendications 16 à 18 précédentes, **caractérisée en ce que** la partie de raidissement de la chaussure (2) tridimensionnelle de forme stable présente plusieurs perforations (13), en particulier de forme ronde, entre le côté intérieur (9) et le côté extérieur (12).

20. Partie de coque d'une chaussure de sport selon l'une des revendications 16 à 19 précédentes, **caractérisée en ce que** plusieurs parties de raidissement de la chaussure (2) pourvues d'un matériau de remplissage (3) sont réalisées comme composants de la partie de coque (1) et sont au moins en partie noyées dans la partie en matériau plastique (8).
